# EUROPÄISCHE PATENTSCHRIFT

(11) **EP 1 841 627 B1**
(45) Veröffentlichungstag und Bekanntmachung des Hinweises auf die Patenterteilung: **08.07.2009**
(21) Anmeldenummer: 06705858.6
(22) Anmeldetag: 27.01.2006
(51) Int. Cl.: B60R 21/20

(54) **AIRBAGBAUEINHEIT**
AIRBAG MODULE
MODULE SAC GONFLABLE

(30) Priorität: 28.01.2005 DE 102005004286
(43) Veröffentlichungstag der Anmeldung: 10.10.2007
(73) Patentinhaber: ZF Friedrichshafen AG, 88038 Friedrichshafen (DE)
(72) Erfinder: FANGMANN, Thomas, 49413 Dinklage (DE); WAGENER, Keit, 49143 Bissendorf (DE); IMKEN, Hans-Jürgen, 49163 Hunteburg (DE)
(86) Internationale Anmeldenummer: PCT/DE2006/000126
(87) Internationale Veröffentlichungsnummer: WO 2006/079330

(56) Entgegenhaltungen:
- EP-A- 1 112 901
- DE-A1- 19 743 615
- US-A- 5 257 815

## Beschreibung

Die Erfindung betrifft eine Airbagbaueinheit für ein Insassenrückhaltesystem in Kraftfahrzeugen mit den im gattungsbildenden Teil des Anspruches 1 genannten Merkmalen.

Derartige Airbagbaueinheiten werden in heutiger Zeit in fast allen von der Kraftfahrzeugindustrie produzierten Personenkraftfahrzeugen in unterschiedlicher Ausgestaltung eingesetzt. Die für die Verwendung derartiger Einheiten vom Kraftfahrzeughersteller aufzuwendenden Kosten werden dabei in der Regel nicht unwesentlich durch die für den Zusammenbau der Airbagbaueinheiten aufzuwendenden Montageschritte und die hierdurch sich ergebenden Zeit- und Kostenfaktoren bestimmt. Darüber hinaus stellt sich die Problematik, dass auf Grund der intensiven Nutzung der Kraftfahrzeuge die Erwartungen an Zuverlässigkeit und Lebensdauer steigenden Anforderungen ausgesetzt sind. Diese Anforderungen führen zu einem erhöhten Aufwand, um beispielsweise die Abdichtung des innerhalb der Airbagbaueinheit platzierten Gasgenerators im Diffusorgehäuse nach außen zuverlässig über die Lebensdauer des Fahrzeuges zu gewährleisten. Die Wirksamkeit der Abdichtung ist dabei auch entscheidend abhängig von den herstellungsbedingt vorhandenen Toleranzen und den dadurch notwendigen konstruktionsbedingten Mitteln zum Toleranzausgleich zwischen den miteinander zu montierenden Bauteilen.

Aus dem Stand der Technik sind unterschiedliche Lösungsvorschläge bekannt, den Zusammenbau gattungsgemäßer Airbagbaueinheiten zu erleichtern und gleichzeitig die Funktionssicherheit in Bezug auf die Gasdichtigkeit der montierten Airbagbaueinheit sicherzustellen.

Beispielsweise ist aus der EP 1 207 086 A1 eine Airbagbaueinheit eines Insassenrückhaltesystems für Kraftfahrzeuge bekannt, bei der der Gasgenerator über eine zentrale Verschraubung mit dem Diffusorgehäuse verschraubt wird, nachdem der Gasgenerator über eine Einbauöffnung in das Diffusorgehäuse eingeführt worden ist. Die Abdichtung der Einbauöffnung geschieht dabei dergestalt, dass am Gasgenerator ein Flansch vorgesehen ist, welcher bei der Montage mit einer Anschlagfläche am Diffusorgehäuse zur Anlage gebracht wird, wobei zwischen Flansch und Diffusorgehäuse ein elastischer Dicht- und Entkoppelungsring eingebracht wird. Die Aufgabenstellungen der Befestigung des Gasgenerators einerseits und seiner Abdichtung innerhalb des Diffusorgehäuses gegen die Außenumgebung andererseits sind somit durch unterschiedliche Bauteile verwirklicht, deren Zusammenfügen den Montage- und somit den Herstellungsaufwand erhöht.

Darüber hinaus ist beispielsweise aus der Offenlegungsschrift DE 10 150 275 A1 ein Gehäuse für einen aufblasbaren Gassack eines Kraftfahrzeuges bekannt, bei dem das Diffusorgehäuse als integral mit dem Airbaggehäuse gestaltetes Bauteil realisiert ist, wobei der Gasgenerator direkt in das Diffusorgehäuse eingesetzt und zu seiner Festsetzung im Diffusorgehäuse eine Verbindung mit der Diffusorgehäuseinnenwandung vorgesehen ist. Gegenüber dem zuerst genannten Stand der Technik ist hierbei zwar eine Reduktion der zu montierenden Bauteile herbeigeführt, die formschlüssige Verbindung zwischen Gasgenerator und Diffusorgehäusinnenwandung lässt jedoch nur eine bestimmte Gasgeneratorbaueinheit zur Verwendung zu, so dass Änderungen des Bauteils zwangsläufig zu einem wesentlich erhöhten Änderungsaufwand an dem auf Grund seiner Funktion komplex gestalteten Airbaggehäuse führen. Darüber hinaus ist durch die integrierte Bauweise des Airbaggehäuses ein Toleranzausgleich und eine Abdichtung des Diffusorgehäuseinnenraumes nach außen an genau einzuhaltende Fertigungsabmaße geknüpft und somit in Bezug auf die Herstellung der zu verbindenden Bauteile wiederum kostenintensiv.

Weiterhin zeigt die gattungsbildende EP 1 112 901 A2 eine Ausführung einer Airbagbaueinheit mit einem Gasgenerator der in einem Diffusorgehäuse angeordnet ist, wobei zur Festlegung des Gasgenerators ein Dichtelement und ein separates und zusätzliches Halteelement vorgesehen ist, damit der Gasgenerator im Gehäuse festgelegt werden kann. Das Dichtelement ist als ein Befestigungsring ausgebildet und ist in dem Zwischenraum von Diffusorgehäusewandung und Gasgeneratorwandung den Gasgenerator umschließend angeordnet.

Ferner offenbart die DE 197 43 615 A1 eine Airbagbaueinheit mit einem in einem Diffusorgehäuse angeordneten Gasgenerator, wobei der Gasgenerator in dem Diffusorgehäuse über einen Dicht- und Entkopplungsring sowie über ein zusätzliches Halteelement, das den Gasgenerator in seiner axialen Einbaulage fixiert, gehalten ist, um die Funktionen Halten des Gasgenerator und Dichten zwischen Gasgenerator und Diffusorgehäuse (2) umzusetzen. Dies bedeutet neben einen zusätzlichen Montageaufwand eine aufwendigeres Handling und Bereitstellen in der Logistikkette, wodurch die Fertigungskosten wesentlich erhöht sind.

Die US 5,257,815 zeigt des Weiteren eine Airbagbaueinheit mit einem in einem Difussorgehäuse angeordneten Gasgenerator. Der Gasgenerator ist in dem Diffusorgehäuse über einen Positionierring, welcher formschlüssig in der Diffusorgehäusewandung festgelegt ist, stirnseitig gehalten. Eine Dichtfunktion kann dabei nicht sicher gewährleistet werden, da durch die Positionierflächen von dem Positionierring und dem Gasgenerator sich die Einhaltung der erforderlichen Toleranzen sehr schwierig gestaltet.

Ausgehend von dem geschilderten Stand der Technik besteht die Aufgabe der Erfindung darin, eine Airbagbaueinheit der gattungsgemäßen Art so weiterzuentwickeln, dass das Zusammenfügen der miteinander zu verbindenden Bauteile auf einfache Art geschehen kann und dass auf einfache Weise ein Toleranzausgleich zwischen den Bauteilen herbeigeführt werden kann, so dass die Ausschussrate der eingesetzten Einzelkomponenten herabgemindert wird. Darüber hinaus soll die Zuverlässigkeit insbesondere im Hinblick auf die Gasdichtigkeit des Diffusorgehäuses im Bereich der Einbauöffnung für den Gasgenerator gegenüber der Außenumgebung weiter verbessert werden.

Diese Aufgaben werden in Zusammenschau mit den gattungsbildenden Merkmalen durch die im kennzeichnenden Teil des Anspruches 1 offenbarte technische Lehre gelöst.

Die Haltevorrichtung zur Festlegung des Gasgenerators im Diffusorgehäuse ist dabei aus einem im Zwischenraum von Diffusorgehäusewandung und Gasgeneratorwandung angeordneten, den Zwischenraum durch eine Dichtvorrichtung gasdicht abdichtenden, ringförmig den Gasgenerator umschließenden Befestigungsring gebildet ist, wobei der Befestigungsring an der Diffusorgehäusewandung formschlüssig festgelegt ist.

Die miteinander zu verbindenden Bauteile des Diffusorgehäuses und des Gasgenerators werden somit durch ein einziges zusätzliches Bauteil miteinander gekoppelt, welches gleichzeitig die Haltefunktion sowie die Dichtfunktion zwischen Diffusorgehäuse und Gasgenerator realisiert. Die Montage ist durch die Zusammenfassung der unterschiedlichen Funktionen in einem Bauteil vereinfacht, gleichzeitig kann der zwischen Diffusorgehäuse und Gasgenerator angeordnete Befestigungsring gegebenenfalls für verschiedene Gasgeneratoren ohne großen Aufwand variiert werden, ohne dass am Airbaggehäuse der Airbagbaueinheit Änderungen notwendig sind.

Erfindungswesentlich sieht die Ausgestaltung der Dichtvorrichtung des Befestigungsringes vor, dass diese mindestens zwei am Befestigungsring radial umlaufend angeordnete Dichtlippen aufweist, welche so zueinander angeordnet sind, dass die Dichtvorrichtung einen im Wesentlichen V-förmigen Querschnitt bildet, wobei die Dichtlippen jeweils einen Schenkel des V-förmigen Querschnittes bilden, und wobei die miteinander verbundenen Schenkelenden in Richtung der Einbauöffnung des Diffusorgehäuses angeordnet sind.

Diese spezielle Ausgestaltung führt im Falle eines Auslösens der Airbagbaueinheit und dem daraus resultierenden Bereitstellen des Gasdruckes zum Aufblasen des Airbags durch den Gasgenerator dazu, dass der erhöhte Innendruck innerhalb der Airbagbaueinheit bedingt durch den speziellen Querschnitt der Dichtvorrichtung zu einem erhöhten Anpressen der Dichtlippen an die jeweils korrespondierenden Diffusorgehäusewandung beziehungsweise Gasgeneratorwandung führt. Somit ist durch die Verstärkung der Dichtwirkung in Folge der V-förmigen Gestaltung auch eine eventuell auftretende nachlassende Elastizität der Dichtvorrichtung nach längerer Einbauzeit nicht mit der Gefahr eines unvollständigen Aufblasens des Airbags verbunden.

Besondere Ausgestaltungen des Gegenstandes der Erfindung ergeben sich ergänzend zur technischen Lehre des Anspruches 1 zusätzlich aus den Merkmalen der auf den Anspruch 1 rückbezogenen Unteransprüche.

Es hat sich insbesondere als zweckmäßig erwiesen, die formschlüssige Festlegung des Befestigungsringes an der Diffusorgehäusewandung mittels einer Schnappvorrichtung vorzunehmen, wobei eine besondere Ausgestaltung der Schnappvorrichtung eine Mehrzahl von radial am Außenumfang des Befestigungsringes angeordneten elastischen Haltezungen vorsieht, welche im Einbauzustand des Befestigungsringes in korrespondierende, an der Diffusorgehäusewandung angeordnete Ausnehmungen eingreifen. Durch diese technische Ausgestaltung wird eine Festlegung des Befestigungsringes im Diffusorgehäuse sowohl in axialer als auch in radialer Richtung sichergestellt. Dabei können radial am Außenumfang des Befestigungsringes vier Haltezungen angeordnet sein, die in ihrer Gesamtheit ausreichende Haltekräfte bereitstellen, wobei gleichzeitig für die Bereitstellung der Haltekräfte nicht zu hohe Montagekräfte notwendig sind und darüber hinaus der Aufwand für die Realisierung der formschlüssigen Festlegung des Befestigungsringes an der Diffusorgehäusewandung gering bleibt.

Darüber hinaus hat es sich als zweckmäßig erwiesen, dass der Befestigungsring eine Anschlagvorrichtung zur axialen Bewegungsbegrenzung des Gasgenerators in Richtung der Einbauöffnung des Diffusorgehäuses im montierten Zustand des Gasgenerators aufweist. Die Anschlagvorrichtung ist dabei so ausgebildet, dass sie mehrere elastische Anschlagzungen aufweist, welche an der Innenseite des Befestigungsringes vorstehend angeordnet sind. Die Ausgestaltung der Anschlagvorrichtung mit den elastischen Anschlagzungen ermöglicht sowohl einen Längentoleranzausgleich des in der Airbagbaueinheit zu montierenden Gasgenerators, wobei die korrekte Lage des Gasgenerators in Verbindung mit dem Befestigungsring und dessen vorgegebener Befestigungslage innerhalb des Diffusorgehäuses eine festgelegte Lage der Dichtvorrichtung und somit eine unter allen Betriebsbedingungen einwandfreie Abdichtwirkung gegenüber der Außenumgebung gewährleistet.

Im Folgenden wird ein Ausführungsbeispiel des Gegenstandes der Erfindung anhand der beigefügten Zeichnungen näher erläutert. Dabei zeigt:
- Figur 1: einen Teilschnitt durch eine erfindungsgemäße Airbagbaueinheit mit angeschlossenem Diffusorgehäuse und im Diffusorgehäuse montierten Gasgenerator,
- Figur 2: eine vergrößerte Schnittdarstellung des erfindungemäß eingesetzten Befestigungsringes und
- Figur 3: eine perspektivische Gesamtdarstellung des Befestigungsringes aus Figur 2.

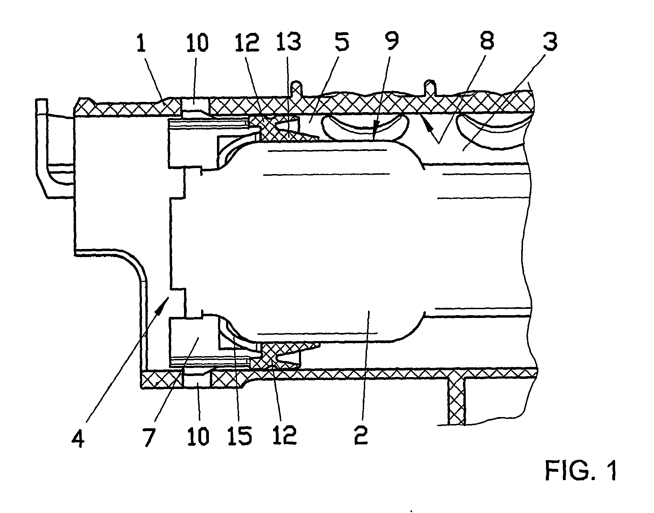

Von der in der Figur 1 in einem Teilbereich dargestellten Airbagbaueinheit für ein Insassenrückhaltesystem in Kraftfahrzeugen sind als wesentliche Bauelemente zur Verdeutlichung der technischen Lehre der Erfindung ein mit der Bezugsziffer 1 dargestelltes Airbaggehäuse, ein Diffusorgehäuse 3 sowie ein innerhalb des Diffusorgehäuses 3 befindlicher Gasgenerator 2 dargestellt. Die Airbagbaueinheit besteht zusätzlich zu den in der Figur 1 dargestellten Bauteilen aus einem Gehäusebereich, in dem ein durch den Inhalt des Gasgenerators 2 mit Gas zu befüllender Airbag zusammengefaltet gelagert ist. Im Falle eines Unfalls wird der Gasgenerator mittels eines Zündsatzes aktiviert, wobei das vom Gasgenerator 2 produzierte Gas über einen in der Figur 1 nicht dargestellten Diffusor den Airbag füllt.

Der Gasgenerator 2 wird während der Montage in das Diffusorgehäuse 3 durch eine Einbauöffnung 4 eingeschoben. Vor dem Einschieben wird der Gasgenerator 2 an seinem dargestellten freien Ende mit einem Befestigungsring 7 versehen. Danach werden Befestigungsring 7 und Gasgenerator 2 gemeinsam in den im Wesentlichen zylindrisch ausgebildeten Innenraum des Diffusorgehäuses 3 eingeschoben. Wie der Figur 1 zu entnehmen ist, befinden sich innerhalb der Diffusorgehäusewandung 8 mehrere Ausnehmungen 10, in die jeweils eine elastische Haltezunge 11 als Bauelement des Befestigungsringes 7 einrastet und sowohl die axiale als auch die radiale Lage des Gasgenerators 2 in Verbindung mit dem Befestigungsring 7 festlegt.

Zum Verständnis der Figur 1 ist zu ergänzen, dass das dem Befestigungsring 7 gegenüber liegende andere freie Ende des Gasgenerators 2, welches mit Gasaustrittsöffnungen versehen ist, in herkömmlicher Weise beim Einschieben an einem Anschlag oder der Stirnwandung des Diffusorgehäuses 3 zur Anlage kommt. Durch die als Schnappvorrichtung ausgebildete Kombination von Ausnehmungen 10 und Haltezungen 11 wird somit im Falle eines Zündens des Gasgenerators 2 und dem daraus resultierenden Druckanstieg innerhalb des Diffusorgehäuses 3 ein Herausdrücken des Gasgenerators durch die Einbauöffnung 4 zuverlässig ausgeschlossen. Somit ist durch die spezielle Gestaltung des Befestigungsringes dahingehend, dass eine formschlüssige Festlegung von Letzterem an der Diffusorgehäusewandung herbeigeführt wird, eine einfache Montage des Gasgenerators innerhalb der Airbagbaueinheit ohne zusätzliches Werkzeug gewährleistet.

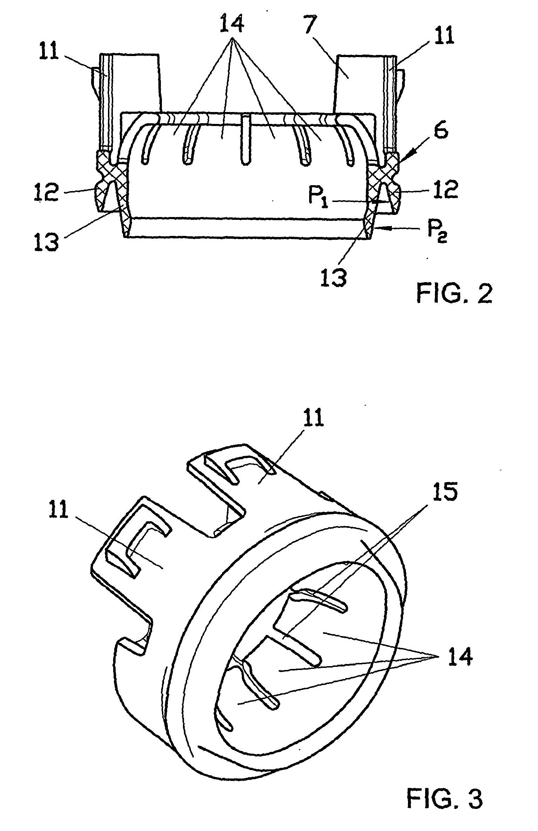

Die Schnittdarstellung des Befestigungsringes 7 in der Figur 2 zeigt darüber hinaus in vergrößerter Darstellung die für die Abdichtung des Diffusorgehäuseinnenraumes gegen den umgebenden Außenraum verantwortliche Ausgestaltung mittels einer Dichtvorrichtung 6, welche aus zwei Dichtlippen 12 und 13 besteht, die im Querschnitt zueinander so angeordnet sind, dass sich insgesamt ein umlaufender V-förmig ausgebildeter Querschnittsbereich am Befestigungsring 7 ergibt. Die miteinander verbundenen Schenkelenden der Dichtlippen 12 und 13 weisen dabei in eingebautem Zustand des Gasgenerators 2 in Richtung der Einbauöffnung 4 des Airbaggehäuses 1. Im Falle eines Auslösens des Gasgenerators wird durch diese konstruktive Gestaltung eine zusätzliche Druckkraft P1 auf die an der Diffusorgehäusewandung 8 anliegende Dichtlippe 12 und eine Druckkraft P2 auf die an der Gasgeneratorwandung 9 anliegende Dichtlippe 13 hervorgerufen. Dies führt zu einer Vergrößerung der Dichtwirkung, sofern nicht schon eine ausreichende Dichtwirkung bereits durch die Elastizität des Materials des Befestigungsringes 7 hervorgerufen wird.

Der Figur 2 als auch der Figur 3 ist darüber hinaus zu entnehmen, dass der Befestigungsring 7 an seiner Innenseite eine Mehrzahl von elastischen Anschlagzungen 14 aufweist. Diese Anschlagzungen 14 sind radial umlaufend an der Innenseite des Befestigungsringes 7 angeordnet und nehmen einen korrespondierenden Absatz 15 des Gasgenerators 2 auf. Die Abmaße und die daraus resultierende Elastizität der Anschlagzungen 14 ist so bemessen, dass diese eventuell vorhandene geringfügig unterschiedliche Längenabmaße des Gasgenerators 2 ausgleichen können, so dass immer eine feste Positionierung des Gasgenerators 2 im Diffusorgehäuse 3 gegeben ist.

Der perspektivischen Darstellung der Figur 3 ist zusätzlich zu entnehmen, dass der Befestigungsring 7 jeweils vier Haltezungen 11 zur Festlegung des Befestigungsringes 7 innerhalb der Ausnehmungen 10 der Diffusorgehäusewandung 8 aufweist. Darüber hinaus kann der Figur 3 entnommen werden, dass die Anschlagzungen 14 durch Schlitze 15 voneinander getrennt sind, deren Tiefe unter anderem als Maß für die Elastizität der Anschlagzungen 14 dient und somit die Fähigkeit zum Toleranzausgleich für das Längenmaß des Gasgenerators 2 definiert.

Der Befestigungsring 7 ist im vorliegenden Ausführungsbeispiel aus Kunststoff, beispielsweise aus Polyamid gefertigt, wodurch eine günstige Herstellung des Bauteiles gewährleistet werden kann. Für spezielle Anwendungsfälle ist es darüber hinaus denkbar, das Material des Befestigungsringes 7 mit Faserverstärkungen zu versehen.

### Bezugszeichenliste

- 1: Airbaggehäuse
- 2: Gasgenerator
- 3: Diffusorgehäuse
- 4: Einbauöffnung
- 5: Zwischenraum
- 6: Dichtvorrichtung
- 7: Befestigungsring
- 8: Diffusorgehäusewandung
- 9: Gasgeneratorwandung
- 10: Ausnehmung
- 11: Haltezunge
- 12: Dichtlippe
- 13: Dichtlippe
- 14: Anschlagzunge
- 15: Schlitz

## Patentansprüche

1. Airbagbaueinheit für ein Insassenrückhaltesystem in Kraftfahrzeugen mit einem von einem Airbaggehäuse (1) aufgenommenen, durch den Inhalt eines Gasgenerators (2) mit Gas zu befüllenden Airbag sowie einem am Airbaggehäuse angeordneten, mit dem Airbaggehäuse über Gasdurchtrittsöffnungen verbundenen Diffusorgehäuse (3), in welchem der über eine Einbauöffnung (4) eingeschobene Gasgenerator (2) durch eine Haltevorrichtung festgelegt ist, wobei die Haltevorrichtung aus einem im Zwischenraum (5) von Diffusorgehäusewandung (8) und Gasgeneratorwandung (9) angeordneten, den Zwischenraum (5) durch eine Dichtvorrichtung (6) gasdicht abdichtenden, ringförmig den Gasgenerator (2) umschließenden Befestigungsring (7) gebildet ist, wobei der Befestigungsring (7) an der Diffusorgehäusewandung (8) formschlüssig festgelegt ist **dadurch gekennzeichnet, dass** die Dichtvorrichtung (6) mindestens zwei am Befestigungsring (7) radial umlaufend angeordnete Dichtlippen (12, 13) aufweist, welche so zueinander angeordnet sind, dass die Dichtvorrichtung (6) einen im Wesentlichen V-förmigen Querschnitt bildet, wobei die Dichtlippen (12, 13) jeweils einen Schenkel des V-förmigen Querschnittes bilden und wobei die miteinander verbundenen Schenkelenden in Richtung der Einbauöffnung des Diffusorgehäuses (3) angeordnet sind.

2. Airbagbaueinheit für ein Insassenrückhaltesystem in Kraftfahrzeugen nach Anspruch 1, **dadurch gekennzeichnet, dass** die formschlüssige Festlegung des Befestigungsringes (7) an der Diffusorgehäusewandung (8) mittels einer Schnappvorrichtung realisiert ist.

3. Airbagbaueinheit für ein Insassenrückhaltesystem in Kraftfahrzeugen nach Anspruch 2, **dadurch gekennzeichnet, dass** die Schnappvorrichtung eine Mehrzahl von radial am Außenumfang des Befestigungsringes (7) angeordnete, elastische Haltezungen (11) aufweist, welche im Einbauzustand des Befestigungsringes (7) in korrespondierende, an der Diffusorgehäusewandung (8) angeordnete Ausnehmungen (10) eingreifen.

4. Airbagbaueinheit für ein Insassenrückhaltesystem in Kraftfahrzeugen nach Anspruch 4, **dadurch gekennzeichnet, dass** radial am Außenumfang des Befestigungsringes (7) vier Haltezungen (11) angeordnet sind

5. Airbagbaueinheit für ein Insassenrückhaltesystem in Kraftfahrzeugen nach Anspruch 1, **dadurch gekennzeichnet, dass** der Befestigungsring (7) eine Anschlagvorrichtung zur axialen Bewegungsbegrenzung des Gasgenerators (2) in Richtung der Einbauöffnung (4) des Diffusorgehäuses (3) im montierten Zustand des Gasgenerators (2) aufweist.

6. Airbagbaueinheit für ein Insassenrückhaltesystem in Kraftfahrzeugen nach Anspruch 5, **dadurch gekennzeichnet, dass** die Anschlagvorrichtung mehrere elastische Anschlagzungen (14) aufweist, welche an der Innenseite des Befestigungsringes (7) vorstehend angeordnet sind.

7. Airbagbaueinheit für ein Insassenrückhaltesystem in Kraftfahrzeugen nach einem der Ansprüche 1 bis 6, **dadurch gekennzeichnet, dass** der Befestigungsring (7) aus Kunststoff hergestellt ist.

8. Airbagbaueinheit für ein Insassenrückhaltesystem in Kraftfahrzeugen nach Anspruch 7, **dadurch gekennzeichnet, dass** der Befestigungsring (7) aus Kunststoff Faserverstärkungen oder Stabilisierungseinlagen aufweist.

## Claims

1. Airbag component for an occupant-restraining system in motor vehicles with an airbag, which is accommodated by an airbag housing (1) and which is to be filled with gas by the contents of a gas generator (2), and a diffuser housing (3), which is arranged on the airbag housing and is connected to the airbag housing via gas through-openings, and in which the gas generator (2), which is pushed in via an installation opening (4), is fixed by means of a retaining device, wherein the retaining device is formed from a fixing ring (7) which is arranged in the interspace (5) of the diffuser housing wall (8) and the gas generator wall (9), seals the interspace (5) in a gas-tight manner by means of a sealing device (6), and surrounds the gas generator (2) in an annular manner, wherein the fixing ring (7) is fixed in a form-fitting manner on the diffuser housing wall (8), **characterised in that** the sealing device (6) has at least two sealing lips (12, 13) which are arranged in a radially circumferential manner on the fixing ring (7) and are arranged with respect to each other in such a manner that the sealing device (6) forms an essentially V-shaped cross section, wherein the sealing lips (12, 13) in each case form a limb of the V-shaped cross section, and wherein the limb ends which are connected to each other are arranged in the direction of the installation opening of the diffuser housing (3).

2. Airbag component for an occupant-restraining system in motor vehicles according to Claim 1, **characterised in that** the form-fitting fixing of the fixing ring (7) on the diffuser housing wall (8) is realised by means of a snap-fitting device.

3. Airbag component for an occupant-restraining system in motor vehicles according to Claim 2, **characterised in that** the snap-fitting device has a plurality of elastic retaining tongues (11) which are arranged radially on the outer circumference of the fixing ring (7) and engage in corresponding recesses (10), which are arranged on the diffuser housing wall (8), when the fixing ring (7) is in its installed state.

4. Airbag component for an occupant-restraining system in motor vehicles according to Claim 3, **characterised in that** four retaining tongues (11) are arranged radially on the outer circumference of the fixing ring (7).

5. Airbag component for an occupant-restraining system in motor vehicles according to Claim 1, **characterised in that** the fixing ring (7) has a stop device for axially limiting the movement of the gas generator (2) in the direction of the installation opening (4) of the diffuser housing (3) when the gas generator (2) is in its mounted state.

6. Airbag component for an occupant-restraining system in motor vehicles according to Claim 5, **characterised in that** the stop device has a plurality of elastic stop tongues (14) which are arranged in a projecting manner on the inside of the fixing ring (7).

7. Airbag component for an occupant-restraining system in motor vehicles according to one of Claims 1 to 6, **characterised in that** the fixing ring (7) is produced from plastic.

8. Airbag component for an occupant-restraining system in motor vehicles according to Claim 7, **characterised in that** the fixing ring (7), which consists of plastic, has fibre reinforcements or stabilising inserts.

## Revendications

1. Module d'airbag pour un système de retenue des occupants des véhicules automobiles comprenant un airbag reçu par un logement d'airbag (1) à remplir de gaz avec le contenu d'un générateur de gaz (2) ainsi qu'un logement de diffuseur (3) placé sur le logement d'airbag, relié au logement d'airbag par des ouvertures de passage du gaz, dans lequel le générateur de gaz (2) poussé à l'intérieur par une ouverture d'intégration (4) est fixé par un dispositif de retenue, le dispositif de retenue étant une bague de fixation (7) entourant le générateur de gaz (2) de manière périphérique, placé dans l'espace (5) entre la paroi du logement de diffuseur (8) et la paroi du générateur de gaz (9) rendant l'espace (5) étanche au gaz par un dispositif étanche (6), la bague de fixation (7) étant fixée par complémentarité de forme sur la paroi du logement de diffuseur (8), **caractérisé en ce que** le dispositif étanche (6) présente au moins deux lèvres d'étanchéité (12, 13) placées de manière radialement périphérique sur la bague de fixation (7), placées l'une par rapport à l'autre de telle manière que le dispositif étanche (6) forme une section essentiellement en V, les lèvres d'étanchéité (12, 13) formant chacune une branche de la section en V et les extrémités de branche reliées entre elles étant placées en direction de l'ouverture d'intégration du logement de diffuseur (3).

2. Module d'airbag pour un système de retenue des occupants des véhicules automobiles selon la revendication 1, **caractérisé en ce que** la fixation par complémentarité de forme de la bague de fixation (7) sur la paroi du logement de diffuseur (8) est réalisée au moyen d'un dispositif encliquetable.

3. Module d'airbag pour un système de retenue des occupants des véhicules automobiles selon la revendication 2, **caractérisé en ce que** la fixation encliquetable présente une pluralité de languettes de retenue (11) élastiques placées radialement sur le pourtour extérieur de la bague de fixation (7), lesquelles, dans l'état intégré de la bague de fixation (7), se mettent en prise dans des évidements (10) correspondants placés sur la paroi du logement de diffuseur (8).

4. Module d'airbag pour un système de retenue des occupants des véhicules automobiles selon la revendication 3, **caractérisé en ce que** quatre languettes de retenue (11) sont placées radialement sur le pourtour extérieur de la bague de fixation (7).

5. Module d'airbag pour un système de retenue des occupants des véhicules automobiles selon la revendication 1, **caractérisé en ce que** la bague de fixation (7) présente un dispositif de butée pour limiter axialement le mouvement du générateur de gaz (2) en direction de l'ouverture d'intégration (4) du logement de diffuseur (3) dans l'état monté du générateur de gaz (2).

6. Module d'airbag pour un système de retenue des occupants des véhicules automobiles selon la revendication 5, **caractérisé en ce que** le dispositif de butée présente plusieurs languettes de butée (14) élastiques, lesquelles sont placées sur le côté intérieur de la bague de fixation (7).

7. Module d'airbag pour un système de retenue des occupants des véhicules automobiles selon l'une des revendications 1 à 6, **caractérisé en ce que** la bague de fixation (7) est fabriquée en plastique.

8. Module d'airbag pour un système de retenue des occupants des véhicules automobiles selon la revendication 7, **caractérisé en ce que** la bague de fixation (7) en plastique présente des renforcements fibreux ou des garnitures de stabilisation.
